# EUROPÄISCHE PATENTSCHRIFT

(11) **EP 0 951 636 B1**
(45) Veröffentlichungstag und Bekanntmachung des Hinweises auf die Patenterteilung: **25.08.2004**
(21) Anmeldenummer: 98949176.6
(22) Anmeldetag: 29.10.1998
(51) Int. Cl.: G01D 18/00, G01C 21/20, G01P 21/02

(54) **NAVIGATIONSSYSTEM MIT EINER WEGEERFASSUNGSVORRICHTUNG**
NAVIGATION SYSTEM WITH A POSITION SENSING DEVICE
SYSTEME DE NAVIGATION MUNI D'UN DISPOSITIF DE DETECTION DE DEPLACEMENT

(30) Priorität: 13.11.1997 DE 19750127
(43) Veröffentlichungstag der Anmeldung: 27.10.1999
(73) Patentinhaber: SIEMENS AKTIENGESELLSCHAFT, 80333 München (DE)
(72) Erfinder: PRIBIL, René, NL-5656 AA Eindhoven (NL); RENNER, Frank, NL-5656 AA Eindhoven (NL)
(86) Internationale Anmeldenummer: PCT/IB1998/001732
(87) Internationale Veröffentlichungsnummer: WO 1999/026043

(56) Entgegenhaltungen:
- DE-A- 19 602 243
- US-A- 4 837 508
- US-A- 4 902 970

## Beschreibung

Die Erfindung bezieht sich auf eine Wegeerfassungsvorrichtung bzw. ein Navigationssystem mit einer Wegeerfassungsvorrichtung, die wenigstens einen Sensor zur Lieferung eines sinusoder rechteckförmigen Signals und eine Umsetzerschaltung zur Lieferung eines rechteckförmigen Signals als Maß für den zurückgelegten Weg des Fahrzeugs enthält.

Ein Navigationssystem, wie z. B. CARIN von Philips Car Systems, benötigt zur Feststellung des Standortes eines Fahrzeuges verschiedene Messdaten. Das sind z. B. Daten von einer Wegeerfassungsvorrichtung, einem elektronischen Kompass und einer GPS-Empfangseinheit (GPS = Global Positioning System). Mit Hilfe der von der Wegeerfassungsvorrichtung und dem elektronischen Kompass gelieferten Signale werden von der Steueranordnung Positionsdaten ermittelt. Die GPS-Empfangseinheit liefert anhand empfangener Satellitendaten ebenfalls die gegenwärtige Position des Fahrzeugs. Eine Wegeerfassungsvorrichtung enthält wenigstens einen aktiven oder einen passiven Sensor, der Signale in Abhängigkeit des zurückgelegten Weges liefert. Ein passiver Sensor liefert ein sinusförmiges Signal, welches beispielsweise eine Amplitude von 1 mV bis 50 V. Ein aktiver Sensor liefert ein rechteckförmiges Signal mit einer typabhängigen Amplitude zwischen 5 V und 12 V. Dieses rechteckförmige Signal kann mit Störungen mit einer Amplitude von 1 V behaftet sein, die beispielsweise von der Lichtmaschine stammen.

Aus der DE-A-196 02 243 ist eine Schaltungsanordnung bekannt, die es ermöglicht, einen aktiven Sensor mit einer elektronischen Auswertung zu verknüpfen, die für einen passiven Sensor konzipiert worden ist. Die Auswerteschaltung enthält hierbei einen Komparator, dessen Ausgangssignal einer weiteren Auswertung zugeführt wird, die ein drehzahlproportionales Signal liefert.

Der Erfindung liegt die Aufgabe zugrunde, eine Wegeerfassungsvorrichtung bzw. ein Navigationssystem mit einer derartigen Wegeerfassungsvorrichtung zu schaffen, die aus sinusoder rechteckförmigen, von wenigstens einem Sensor gelieferten Signalen weitgehend ungestörte rechteckförmige Signale bildet.

Die erfindungsgemäße Wegeerfassungsvorrichtung enthält
- wenigstens einen Sensor zur Lieferung eines sinus- oder rechteckförmigen Signals in Abhängigkeit des zurückgelegten Weges,
- einen Detektor zur Feststellung der Art des von wenigstens einem Sensor gelieferten Signals wenigstens bis zu einer mittleren Geschwindigkeit, ...
- einen Haltespeicher zur Speicherung eines ersten Zustands bei Detektion eines sinusförmigen Signals und eines zweiten Zustands bei Detektion eines rechteckförmigen Signals,
- eine Verstärkerschaltung zum Empfang des von wenigstens einem Sensor abgeleiteten Signals im ersten Zustand und
- eine Komparatorschaltung (26) zum Empfang des Ausgangssignals der Verstärkerschaltung (25) im ersten Zustand und des von wenigstens einem Sensor (18) abgeleiteten Signals im zweiten Zustand und zur Lieferung eines rechteckförmigen Signals als Maß für den zurückgelegten Weg des Fahrzeugs.

Erfindungsgemäß wird von dem Detektor nach dem Einschalten des Navigationssystems und bei Fahrtantritt oder nach Aus- und Wiedereinschalten des Navigationssystems während der Fahrt festgestellt, ob von einem oder mehreren Sensoren sinus- oder rechteckförmige Signale geliefert werden. Die Detektion kann aber nur bis zu einer mittleren Geschwindigkeit von z.B. 100 km/h durchgeführt werden. In einem dem Detektor nachgeschalteten Haltespeicher wird ein erster Zustand gespeichert, wenn ein sinusförmiges Signal detektiert worden ist. Im anderen Fall wird ein zweiter Zustand gespeichert. Das sinusförmige Signal wird über eine Verstärkerschaltung geführt und anschließend in einer Komparatorschaltung in ein rechteckförmiges Signal umgesetzt. Im zweiten Zustand wird das rechteckförmige Signal nicht über die Verstärkerschaltung, sondern direkt der Komparatorschaltung zugeführt. Das rechteckförmige Signal wird also nicht verstärkt. Dadurch können weitgehend alle z.B. durch eine Lichtmaschine (z.B. mit einer Amplitude von 1 V) hervorgerufenen Störungen bei geeigneter Dimensionierung der Komparatorschaltung unterdrückt werden.

Das von wenigstens einem Sensor abgeleitete sinus- oder rechteckförmige Signal wird über einen Umschalter zur Verstärker- oder Komparatorschaltung geleitet, wie in Anspruch 2 ausgeführt. Eine Ausführungsform des Detektors ist in Anspruch 3, des Haltespeichers in Anspruch 4 und der Komparatorschaltung in Anspruch 5 beschrieben. Die Erfindung bezieht sich auch auf eine Wegeerfassungsvorrichtung, wie in Anspruch 6 beschrieben. Ferner kann die erfindungsgemäße Wegeerfassungsvorrichtung zur Ansteuerung einer Geschwindigkeitsanzeigevorrichtung oder anderer Vorrichtungen zur Auswertung von geschwindigkeitsabhängigen Signalen benutzt werden.

Ein Ausführungsbeispiel der Erfindung wird nachstehend anhand der Figuren näher erläutert. Es zeigen:
Fig. 1 ein Blockschaltbild eines Navigationssystems für Landfahrzeuge,
Fig. 2 ein Blockschaltbild einer im Navigationssystem nach Fig. 1 verwendeten Wegeerfassungsvorrichtung,
Fig. 3 ein Blockschaltbild einer in der Wegeerfassungsvorrichtung nach Fig. 2 verwendeten Umsetzerschaltung,
Fig. 4 eine in der Umsetzerschaltung nach Fig. 3 verwendete Schutzschaltung,
Fig. 5 ein in der Umsetzerschaltung nach Fig. 3 verwendeter Detektor,
Fig. 6 ein in der Umsetzerschaltung nach Fig. 3 verwendeter Haltespeicher,
Fig. 7 eine in der Umsetzerschaltung nach Fig. 3 verwendete Verstärkerschaltung und Fig. 8 eine in der Umsetzerschaltung nach Fig. 3 verwendete Komparatorschaltung.

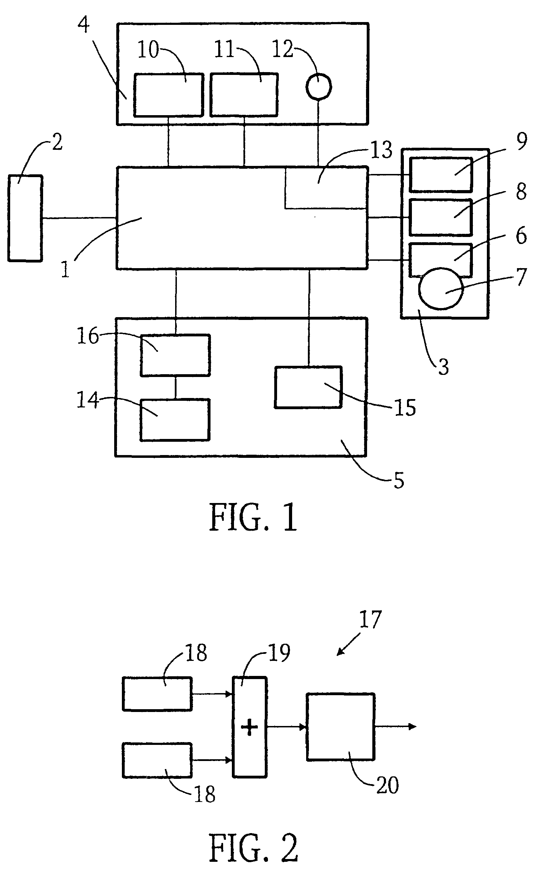

In Fig. 1 ist ein Ausführungsbeispiel eines Navigationssystems für Landfahrzeuge als Blockschaltbild dargestellt. Das Navigationssystem enthält eine Steueranordnung 1, eine Meßanordnung 2, eine Datenquellenanordnung 3, eine Eingabeanordnung 4 und eine Ausgabeanordnung 5. Die Steueranordnung 1 kann beispielsweise einen Mikroprozessor enthalten, der u.a. die Navigationsberechnungen durchführt und mit wenigstens einem Festwertspeicher (ROM) z.B. zur Ausführung eines Programms und einem Schreib- und Lesespeicher (RAM) zur Speicherung von Daten während des Betriebes gekoppelt ist.

Die Meßanordnung 2 liefert der Steueranordnung 1 Daten und enthält beispielsweise eine Wegeerfassungsvorrichtung, einen elektronischen Kompaß und eine GPS-Empfangseinheit (GPS = Global Positioning System). Mit Hilfe der von der Wegeerfassungsvorrichtung und dem elektronischen Kompaß gelieferten Signale werden von der Steueranordnung Positionsdaten ermittelt. Die GPS-Empfangseinheit liefert anhand empfangener Satellitendaten ebenfalls die gegenwärtige Position des Fahrzeugs und gibt die berechneten Positionsdaten an die Steueranordnung 1 weiter.

Die Datenquellenanordnung 3 enthält wenigstens eine Vorrichtung zur Lieferung digital codierter geographischer Daten von einem Datenspeicher an die Steueranordnung 1. Diese Vorrichtung kann beispielsweise ein CD-ROM-Laufwerk 6 sein, daß Daten eines bestimmten Bereichs (z.B. Deutschland) von einer CD-ROM 7 entnimmt. Weiter kann die Datenquellenanordnung 3 einen RDS-TMC-Empfänger 8 (RDS = Radio Data System, TMC = Traffic Message Channel) oder ein GSM-Modul 9 (GSM = Global System for Mobile Communication) enthalten, die digital codierte Verkehrsmeldungen empfangen und an die Steueranordnung 1 weitergeben.

Die Eingabeanordnung 4 enthält eine Tastatur 10, gegebenenfalls einen Trackball 11 und ein Mikrofon 12. Ein Benutzer kann manuelle Eingaben über die Tastatur 10 und/oder den Trackball 11 und/oder Spracheingaben über.das Mikrofon 12 durchführen. Die Tastatur 10 kann dabei auch Teil einer Fernbedienung sein. Die von einem Benutzer (z.B. Fahrer) des Navigationssystems gemachten Eingaben über die Eingabeanordnung 4 werden auch der Steueranordnung 1 zugeführt.

Die über das Mikrofon 12 gemachten Spracheingaben werden einem Spracherkenner 13 zugeführt, der Teil der Steueranordnung 1 ist. Der Spracherkenner 13 besteht beispielsweise aus einem Signalprozessor mit Peripherieschaltelementen, wie z.B. wenigstens ein Speicher. Der Signalprozessor arbeitet nach einem in einem Speicher abgelegten Softwaremodul zur Spracherkennung. Die Steueranordnung enthält außer dem Spracherkenner 13 wenigstens einen weiteren Prozessorbaustein mit entsprechenden Peripherieelementen.

Die Ausgabeanordnung 5 kann eine Anzeigevorrichtung 14 und eine Sprachausgabeschaltung 15 aufweisen. Zur Ansteuerung der Anzeigevorrichtung 14 dient noch eine ebenfalls in der Ausgabeanordnung 5 enthaltene Ansteuerschaltung 16.

Die Steueranordnung 1 bestimmt zwischen wenigstens zwei Punkten (Start- und Zielpunkt) eine Strecke oder Route. Vor der Fahrt hat der Benutzer (z.B. Fahrer) über die Eingabeanordnung 4 mindestens den Zielpunkt einzugeben. Diese eingegebenen Daten werden in der Regel auch von der Ausgabeanordnung 5 zur Kontrolle für den Benutzer ausgegeben. Während der Fahrt werden dem Fahrer akustische oder optische Anweisungen von der Steueranordnung 1 mittels der Ausgabeanordnung 5 erteilt. Zur Durchführung z.B. der Streckenplanung und der Anweisungen verwendet die Steueranordnung 1 verschiedene Soflwaremodule. Anhand der von der Meßvorrichtung 2 gelieferten Daten (Positions-, Richtungs- und Entfemungsdaten) und den von der Datenquellenanordnung 3 zugeführten Daten berechnet die Steueranordnung 1 mittels eines Softwaremoduls zur Positionsbestimmung den jeweiligen Positionspunkt des Fahrzeugs zu Beginn und während der Fahrt. Ein weiteres Modul zur Routenplanung berechnet jeweils die zu dem jeweiligen Zielpunkt zu fahrende Route anhand der von dem Softwaremodul zur Positionsbestimmung ausgegebenen Position und dem Zielpunkt. Hierbei können auch Verkehrsmeldungen berücksichtigt werden, um beispielsweise den Fahrer anzuweisen, einen Stau zu umfahren. Ein Softwaremodul zur Routenangabe empfängt den jeweiligen Positionspunkt von dem Softwaremodul zur Positionsbestimmung, verschiedene Routenangaben von dem Softwaremodul zur Routenplanung und gegebenenfalls auch Navigationsdaten von der Datenquellenanordnung 3. Das Softwaremodul zur Routenangabe erzeugt Steuerdaten für die Sprachausgabe und für die bildliche Darstellung von Anweisungen. Es ist auch möglich, einen Landkartenausschnitt auf der Anzeigevorrichtung 14 mit der jeweiligen Positionsangabe darzustellen.

Fig. 2 zeigt ein Blockschaltbild einer Wegeerfassungsvorrichtung 17, die Bestandteil der Meßanordnung 2 ist. Die Wegeerfassungsvorrichtung 17 enthält wenigstens einen Sensor 18. Es kann sich hierbei um einen passiven oder aktiven Sensor 18 handeln. Beide Sensortypen sind in der Nähe einer rotierenden Achse montiert, die sich proportional zur Fahrzeuggeschwindigkeit bzw. zum zurückgelegten Weg bewegen.

Ein passiver Sensor ist beispielsweise ein nach dem Induktionsgesetz arbeitender Sensor. Hierbei wird ein Magnetstreifen in die Felge eines Rades geklebt und ein Sensor an der Achse angebracht. In diesem passiven Sensor befindet sich eine Spule mit Eisenkern. Bewegt sich das Rad, so wird in der Spule durch den bewegten Magnetstreifen eine Induktionsspannung erzeugt. Diese Induktionsspannung ist eine sinusförmige Spannung, deren Frequenz und Amplitude drehzahlabhängig ist. Hierbei liegt beispielsweise die drehzahlabhängige Frequenz in einem Bereich zwischen 0,1 Hz und 5 kHz und die drehzahlabhängige Amplitude zwischen 1 mV und 50 V.

Aktive Sensoren können z.B. nach dem Hallprinzip arbeitende Sensoren sein, deren Ausgangsspannung einen rechteckförmigen Verlauf mit konstanter Amplitude aber unterschiedlicher Frequenz hat. Eine von einem aktiven Sensor gelieferte rechteckförmige Spannung weist eine typabhängige Amplitude zwischen 5 V und 12 V auf und schwankt in Abhängigkeit von dem zurückgelegten Weg beispielsweise in einem Frequenzbereich zwischen 5 mHz und 2,5 kHz. Das Funktionsprinzip bei den nach dem Hallprinzip arbeitenden Sensoren ist, daß ein elektronischer Schalter durch ein wechselndes Magnetfeld ein- und ausgeschaltet wird.

In Fig. 2 sind zwei Sensoren 18 dargestellt, deren sinus- oder rechteckförmige Ausgangssignale in einer Kombinationsschaltung 19 verknüpft werden. Die von der Kombinationsschaltung 19 gelieferten Signale werden einer Umsetzerschaltung 20 zugeführt. Die Umsetzerschaltung 20 erkennt kurz nach dem Einschalten des Navigationssystems und bei Fahrtantritt oder nach einem Aus- und Einschalten während der Fahrt, ob ein sinus- oder rechteckförmiges Signal von der Kombinationsschaltung 19 abgegeben wird. Hieraus wird ein rechteckförmiges Ausgangssignal mit einer definierten maximalen Amplitude gebildet. Die Frequenz der rechteckförmigen Signale ist ein Maß für den zurückgelegten Weg. In der Steueranordnung 1 werden die ansteigenden Flanken des von der Umsetzerschaltung 20 gelieferten rechteckförmigen Signals ausgewertet.

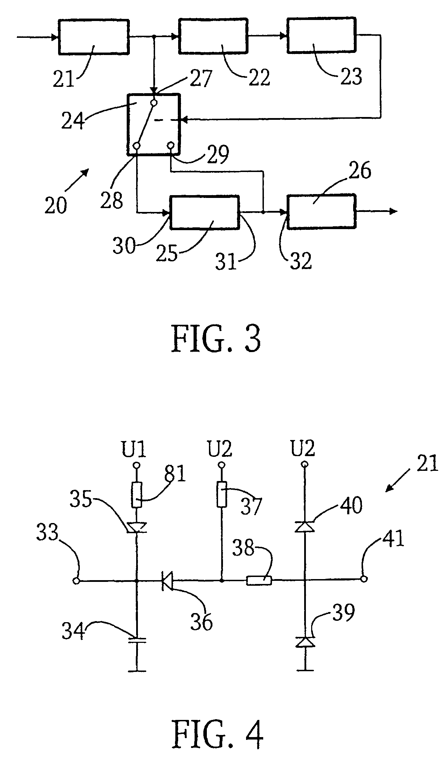

Ein Blockschaltbild der Umsetzerschaltung 20 zeigt Fig. 3. Diese enthält eine Schutzschaltung 21, einen Detektor 22, einen Haltespeicher 23, einen Umschalter 24, eine Verstärkerschaltung 25 und eine Komparatorschaltung 26. Die von der Schutzschaltung 21 verarbeiteten sinus- oder rechteckförmigen Signale werden dem Detektor 22 und einem Eingang 27 des Umschalters 24 zugeführt. Der Detektor 22 ermittelt, ob es sich um sinus- oder rechteckförmige Signale handelt. In Abhängigkeit von dem Detektionsergebnis wird kurz nach dem Einschalten und bei Fahrtantritt oder nach einem Aus- und Einschalten während der Fahrt der Haltespeicher 23 gesetzt. Der Haltespeicher 23 kann zwei Zustände speichern. Ein erster Zustand wird bei einem sinusförmigen und ein zweiter Zustand bei einem rechteckförmigen Signal gespeichert. Im ersten Zustand koppelt der Umschalter 24 den Eingang 27 mit seinem ersten Ausgang 28 und im zweiten Zustand seinen Eingang 27 mit seinem zweiten Ausgang 29. Der Ausgang 28 ist mit einem Eingang 30 der Verstärkerschaltung 25 und der Ausgang 29 mit einem Eingang 32 der Komparatorschaltung 26 verbunden, der die Ausgangssignale der Umsetzerschaltung 20 liefert.

Ein Ausführungsbeispiel der Schutzschaltung 21 ist in Fig. 4 dargestellt. Der Eingang 33 ist mit einem an Masse gelegten Kondensator 34, der Kathode einer Diode 35 und der Kathode einer Diode 36 verbunden. Die Anode der Diode 35 ist über einen Widerstand 81 an eine erste Spannungsquelle U1 gelegt. Die Anode der Diode 36 ist über einen Widerstand 37 mit einer zweiten Spannungsquelle U2 und über einen Widerstand 38 mit einer Kathode einer Diode 39, einer Anode einer Diode 40 und dem Ausgang 41 der Schutzschaltung 20 gekoppelt. Die Kathode der Diode 40 ist an die zweite Spannungsquelle U2 und die Anode der Diode 39 an Masse gelegt. Die Schutzschaltung 20 hat eine Entkopplungs- und Begrenzungsfunktion.

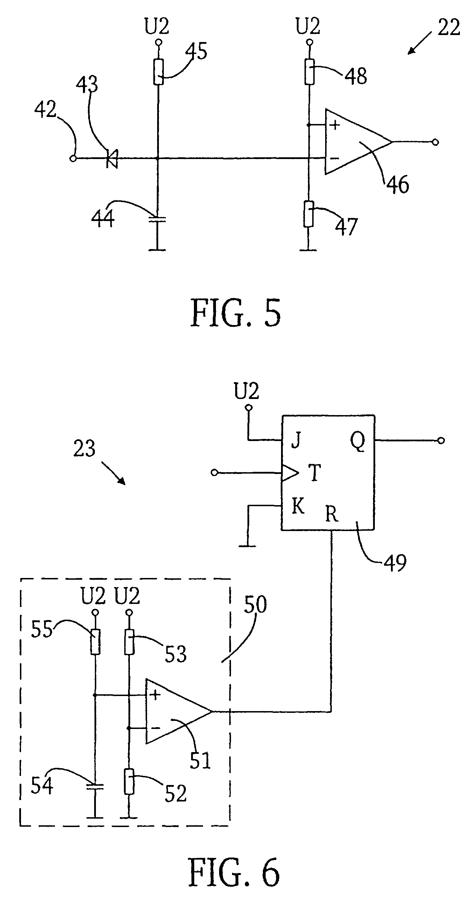

Fig. 5 zeigt ein detaillierteres Schaltbild des Detektors 22. Der Eingang 42 des Detektors 22 ist mit der Kathode einer Diode 43 verbunden. Die Anode der Diode 43 weist eine Verbindung mit einem an Masse angeschlossenen Kondensator 44, mit einem an die zweite Spannungsquelle U2 angeschlossenen Widerstand 45 und dem invertierenden Eingang eines Operationsverstärkers 46 auf. Der Kondensator 44 und der Widerstand 45 bilden einen Tiefpaß. Die Diode 43 und der Widerstand 45 führen eine Signalanhebung und Entkopplung durch. Der nichtinvertierende Eingang des Operationsverstärkers 46, dessen Ausgang den Ausgang des Detektors 22 bildet, ist über einen Widerstand 47 mit Masse und über einen Widerstand 48 mit der zweiten Spannungsquelle U2 gekoppelt. Die Widerstände 47 und 48 bilden einen Spannungsteiler. Wenn am Eingang 42 eine niederfrequente rechteckförmige Spannung anliegt, wird am Ausgang ebenfalls eine rechteckförmige Spannung erzeugt. Der Kondensator 44 dient dazu, daß sinusförmige Signale, welche den als Komparator arbeitenden Operationsverstärker 46 zum Schalten anregen, auf Masse abgeleitet werden. Solche sinusförmigen Signale, welche bewirken, daß der Operationsverstärker 46 ab einem bestimmten Schwellwert schaltet, treten erst bei höheren Geschwindigkeiten des Fahrzeugs und damit bei einer mittleren Frequenz auf. Der Kondensator 44 muß also so dimensioniert werden, daß alle sinusförmigen Signale welche eine Amplitude aufweisen, die den Operationsverstärker 46 zum Schalten anregen, auf Masse abgeleitet werden. Hierdurch werden aber auch die höherfrequenten rechteckförmigen Signale nicht an den Operationsverstärker 46 weitergeleitet.

Der Haltespeicher 23, dessen detailliertes Schaltbild in Fig. 6 dargestellt ist, enthält ein JK-Kippglied 49 und eine Startschaltung 50. Der Takteingang T des JK-Kippgliedes empfängt das Ausgangssignal des Detektors 22. Der K-Eingang ist an Masse und der J-Eingang an die Spannungsquelle U2 gelegt. Das Ausgangssignal des JK-Kippgliedes 49 ist vom Q-Ausgang abnehmbar. Der Rücksetzeingang R ist mit der Startschaltung 50 verbunden. Diese enthält einen als Komparator arbeitenden Operationsverstärker 51, dessen invertierender Eingang mit einem an Masse angeschlossenen Widerstand 52 und einem an die Spannungsquelle U2 angeschlossenen Widerstand 53 und dessen nichtinvertierender Eingang mit einem an Masse angeschlossenen Kondensator 54 und einem an die Spannungsquelle U2 angeschlossenen Widerstand 55 verbunden ist.

Sinkt das Eingangssignal, hat der Q-Ausgang des JK-Kippgliedes 49 den logischen Zustand "1", welcher der Spannung U2 entspricht. Diesen Zustand nimmt das JK-Kippglied 49 nur an, wenn am Eingang des Detektors 22 ein rechteckförmiges Signal anliegt. Wenn am Eingang des Detektors 22 ein sinusförmiges Signal anliegt, bleibt das JK-Kippglied 49 im Einschaltzustand, d.h. der Q-Ausg-ang hat den logischen Zustand "0". Der logische Zustand "0" des Ausgangssignals des JK-Kippgliedes 49 gibt den ersten Zustand des Haltesspeichers 23 und der logische Zustand "1" des Ausgangssignals des JK-Kippgliedes 49 gibt den zweiten Zustand des Haltesspeichers 23 an.

Der Haltespeicher 23 ist darauf ausgelegt, bei jedem Einschalten des Navigationssystems und zu Beginn der Fahrt einen ersten oder zweiten Zustand zu speichern. Liegt ein rechteckförmiges Signal an, bleibt das JK-Kippglied unabhängig von dem Eingangssignal am Takteingang T in diesem Zustand (Selbsthaltung). Erst bei erneutem Aus- und Wiedereinschalten des Navigationssystems, kann eine erneute Unterscheidung zwischen sinus- und rechteckförmigen Signalen vorgenommen werden.

Wie oben zur Beschreibung des Detektors 22 erwähnt, werden sinus- und rechteckförmige Signale bei einer mittleren Frequenz, wenn sie unter einem bestimmten Schwellwert liegen, nicht mehr vom Detektor 22 weiterverarbeitet, da sie über den Kondensator 44 an Masse abgeleitet werden. Diese mittlere Frequenz entspricht beispielsweise der Geschwindigkeit von 100 km/h. Das bedeutet, daß eine Entscheidung für ein rechteckförmiges Signal für den Haltespeicher 23 nur bei niederfrequenten Signalen und damit bei geringeren Geschwindigkeiten (z.B. unter 100 km/h) möglich ist. Bei höheren Geschwindigkeiten wird also immer ein sinusförmiges Signal vorausgesetzt.

Wird das Navigationssystem bei höheren Fahrzeuggeschwindigkeiten (z.B. über 100 km/h) aus- und wiedereingeschaltet, befindet sich das JK-Kippglied 49 zuerst im Anfangszustand, d.h. es wird ein sinusförmiges Signal vorausgesetzt. Das bedeutet, daß auch rechteckförmige Signale über die Verstärkerschaltung 25 geleitet werden, da eine Unterscheidung bei höheren Geschwindigkeiten nicht vorgesehen ist. Wird das Fahrzeug langsamer und die Frequenz sinkt damit unter einen durch den Kondensator 44 bestimmten Schwellwert wird das JK-Kippglied gesetzt, d.h. in diesem Zustand wird nur noch ein rechteckförmiges Signal ausgewertet.

Um für den Einschaltzustand einen definierten Anfangszustand herzustellen, ist die Startschaltung 50 zuständig. Die Widerstände 52 und 53 (Spannungsteiler) legen den Schaltwert fest. Erreicht der Spannungswert am nichtinvertierenden Eingang des Operationsverstärkers 51 diesen Schaltwert, steigt die Spannung am Ausgang des Operationsverstärkers 51 von einem ersten auf einen zweiten Wert (z.B. von 0 V auf 5 V). Der Schaltwert wird erst nach einer durch den Wert des Widerstandes 55 und den Wert des Kondensators 54 bestimmten Zeit (Ladezeitkonstante) erreicht. Die Ladezeitkonstante kann beispielsweise gleich 1 s sein, d.h. der Rücksetzeingang des JK-Kippgliedes 49 liegt ungefähr 1 s auf einem ersten Wert (z.B. 0 V). Dies ist notwendig, damit die beiden Ausgänge des JK-Kippgliedes 49 den oben genannten Anfangszustand annehmen können (Q-Ausgang auf dem logischen Zustand "0"). Nach Ablauf der bestimmten Zeit wechselt der Ausgangswert des Operationsverstärkers auf den zweiten Wert (z.B. 5 V), womit das JK-Kippglied betriebsbereit wird und auf abfallende Flanken am Takteingang T reagieren kann.

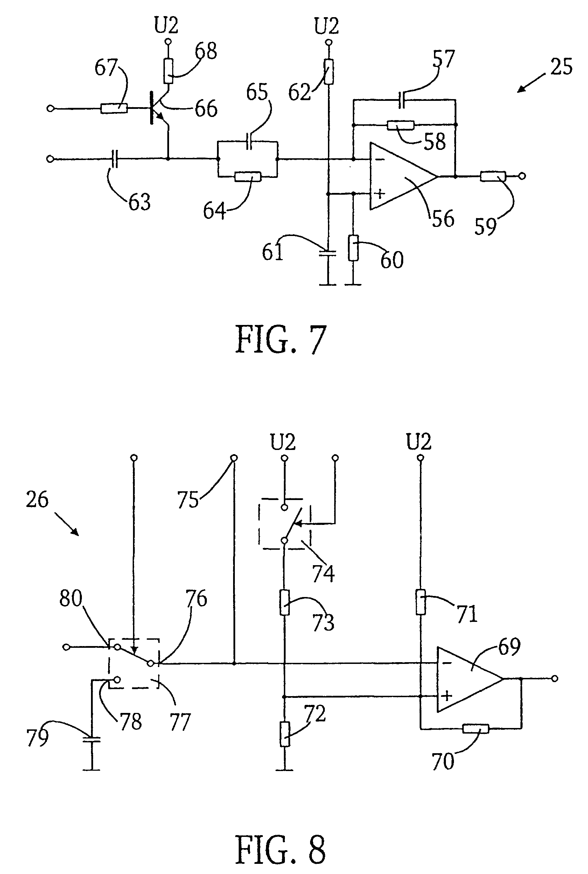

In Fig. 7 ist ein detaillierteres Schaltbild der Verstärkerschaltung 25 gezeigt, über die in der Regel nur sinusförmige Signale geleitet werden. Das zentrale Element der Verstärkerschaltung 25 ist ein Operationsverstärker 56, dessen Rückkopplungszweig eine Parallelschaltung mit einem Kondensator 57 und einem Widerstand 58 enthält. Der Ausgang des Operationsverstärkers 56 ist mit einem Anschluß eines Widerstands 59 verbunden, dessen anderer Anschluß den Ausgang der Verstärkerschaltung 25 bildet. Der nichtinvertierende Eingang des Operationsverstärkers 56 ist über eine Parallelschaltung aus Widerstand 60 und Kondensator 61 mit Masse und über einen Widerstand 62 mit der zweiten Spannungsquelle U2 gekoppelt. Über einen-Kondensator 63 und einer Parallelschaltung aus einem Widerstand 64 und einem Kondensator 65 wird ein Signal vom ersten Ausgang 28 des Umschalters 24 zugeführt. Die Verstärkerschaltung 25 verstärkt das gelieferte sinusförmige Signal und fuhrt eine Flankendetektion und Bandbegrenzung durch.

Damit die Verstärkerschaltung 25 bei einer Kopplung des Eingangs 27 und des zweiten Ausgangs 29 des Umschalters, wenn also rechteckförmige Signale detektiert worden sind, nicht zu schwingen beginnt, ist ein weiterer Schaltungsteil aus einem Transistor 66 und zwei Widerständen 67 und 68 in die Verstärkerschaltung 25 eingefügt. Der Q-Ausgang des JK-Kippgliedes 49 ist mit einem Anschluß des Widerstandes 67 verbunden. Der andere Anschluß des Widerstandes 67 ist an den Basisanschluß des Transistors 66 gelegt. Dem Kollektoranschluß des Transistors 66 ist über den Widerstand 68 mit der zweiten Spannungsquelle U2 gekoppelt. Der Emitteranschluß des Transistors 66 ist mit dem Knoten verbunden, der den Kondensator 63 und die Parallelschaltung aus Widerstand 64 und Kondensator 65 verbindet. Weist das Ausgangssignal des JK-Kippgliedes den logischen Zustand "1" auf, wird der Transistor 66 leitend und mittels der zweiten Spannungsquelle U2 wird der invertierende Eingang des Operationsverstärkers 56 auf einen definierten Zustand gesetzt.

Ein detaillierteres Schaltbild der Komparatorschaltung 26 ist in Fig. 8 dargestellt, dessen zentrales Element ein als Komparator arbeitender Operationsverstärker 69 ist. Ein Widerstand 70 ist im Rückkopplungszweig des Operationsverstärkers 69 angeordnet, d.h. ein Anschluß des Widerstands 70 ist mit dem nichtinvertierenden Eingang und der andere Anschluß mit dem Ausgang des Operationsverstärkers 69 verbunden. Ferner ist mit dem nichtinvertierenden Eingang ein an die zweite Spannungsquelle U2 gelegter Widerstand 71, ein an Masse gelegter Widerstand 72 und ein Anschluß eines Widerstandes 73 verbunden. Der andere Anschluß des Widerstandes 73 ist über einen Schalter 74 an die zweite Spannungsquelle U2 angeschlossen. Der invertierende Eingang des Operationsverstärkers 69 ist mit einem Eingangsanschluß 75 und einem Ausgang 76 eines weiteren Umschalters 77 verbunden. Ein Eingangsanschluß 78 ist über einen Kondensator 79 mit Masse gekoppelt. Der andere Eingangsanschluß 80 des Umschalters 77 ist mit dem Ausgang der Verstärkerschaltung 25 verbunden. Der Schalter 74 und der Umschalter 77 werden ebenso wie der Umschalter 24 und der Transistor 66 von dem Haltespeicher 23 über das Ausgangssignal, welches vom Q-Ausgang des JK-Kippgliedes abgegeben wird, gesteuert. Im ersten Zustand des Haltespeichers 23 ist der Schalter 74 geöffnet und der Umschalter 77 koppelt den Eingang 80 mit dem Ausgangsanschluß 76. Das bedeutet, daß Signale von der Verstärkerschaltung 25 zum invertierenden Eingang des Operationsverstärkers 69 geführt werden. Im zweiten Zustand des Haltespeichers 23 ist der Schalter 74 geschlossen und der Eingang 78 mit dem Ausgang 76 verbunden. Im zweiten Zustand wird also der an Masse gelegte Kondensator 79 mit dem invertierenden Eingang des Operationsverstärkers 69 verbunden. Der Schalter 74 bewirkt, daß im ersten und zweiten Zustand jeweils unterschiedliche Schalthysteresen vorliegen, die durch die ein Widerstandsnetzwerk bildenden Widerstände 70, 71, 72 und 73 bestimmt werden. Im Falle eines rechteckförmigen Signals ist die Schalthysterese dabei so dimensioniert, daß weitgehend alle Störungen im gelieferten rechteckförmigen Signal unterdrückt werden und solche gelieferten rechteckförmigen Signale, die einen Gleichanteil aufweisen, verarbeitet werden können. Wie oben schon erwähnt liegen am Ausgang des Operationsverstärkers 69 rechteckförmige Ausgangssignale vor. Der Abstand der ansteigenden bzw. abfallenden Flanken des rechteckförmigen, band- und amplitudenbegrenzten Ausgangssignals der Komparatorschaltung 26 ist ein Maß für den zurückgelegten Weg des Fahrzeugs.

## Patentansprüche

1. Wegeerfassungsvorrichtung (17), die
- wenigstens einen Sensor zur Lieferung eines sinus- oder rechteckförmigen Signals in Abhängigkeit des zurückgelegten Weges,
- eine Detektor (22) zur Feststellung der Art des von wenigstens einem Sensor (18) gelieferten Signals wenigstens bis zu einer mittleren Geschwindigkeit,
- einen Haltespeicher (23) zur Speicherung eines ersten Zustands bei Detektion eines sinusförmigen Signals und eines zweiten Zustands bei Detektion eines rechteckförmigen Signals,
- eine Verstärkerschaltung (25) zum Empfang des von wenigstens einem Sensor (18) abgeleiteten Signals im ersten Zustand und
- eine Komparatorschaltung (26) zum Empfang des Ausgangssignals der Verstärkerschaltung (25) im ersten Zustand und des von wenigstens einem Sensor (18) abgeleiteten Signals im zweiten Zustand und zur Lieferung eines rechteckförmigen Signals als Maß für den zurückgelegten Weg des Fahrzeugs enthält.

2. Wegeerfassungsvorrichtung (17) nach Anspruch 1, **dadurch gekennzeichnet, dass** ein Umschalter (24) zum Empfang wenigstens eines von einem Sensor (18) abgeleiteten Signals an seinem Eingang (27) und zur Kopplung seines Eingangs (27) mit seinem ersten Ausgang (28), der mit dem Eingang (30) der Verstärkerschaltung (25) gekoppelt ist, während des ersten Zustands und seines Eingangs (27) mit seinem zweiten Ausgang (29), der mit dem Eingang (32) der Komparatorschaltung (26) gekoppelt ist, während des zweiten Zustands vorgesehen ist.

3. Wegeerfassungsvorrichtung (17) nach Anspruch 1, **dadurch gekennzeichnet, dass** der Detektor (22) einen als Komparator arbeitenden Operationsverstärker (46) enthält, dessen nichtinvertierender Eingang mit einem Spannungsteiler (47, 48) zur Einstellung des Schwellwertes und dessen invertierender Eingang mit einem Tiefpass (44, 45) gekoppelt ist, über den von wenigstens einem Sensor (18) Signale zugeführt werden.

4. Wegeerfassungsvorrichtung (17) nach Anspruch 1, **dadurch gekennzeichnet, dass** der Haltespeicher (23) ein JK-Kippglied (49) enthält, dessen Takteingang zum Empfang des Ausgangssignals des Detektors (22) vorgesehen ist.

5. Wegeerfassungsvorrichtung (17) nach Anspruch 1, **dadurch gekennzeichnet, dass** die Komparatorschaltung (26) einen als Komparator arbeitenden Operationsverstärker enthält, dessen nichtinvertierender Eingang mit einem Widerstandsnetzwerk zur Einstellung einer ersten Schalthysterese während des ersten Zustands und einer zweiten Schalthysterese während des zweiten Zustands verbunden ist.

6. Navigationssystem mit einer Wegeerfassungsvorrichtung (17) nach einem der Ansprüche 1 bis 5.

## Claims

1. Position-sensing device (17) which contains
- at least one sensor for supplying a sinusoidal or square-wave signal as a function of the distance travelled,
- a detector (22) for determining the type of the signal supplied by at least one sensor (18), at least up to an average speed,
- the sample-and-hold memory (23) for storing a first state when a sinusoidal signal is detected, and a second state when a square-wave signal is detected,
- an amplifier circuit (25) for receiving the signal in the first state, sampled by at least one sensor (18), and
- a comparator circuit (26) for receiving the output signal of the amplifier circuit (25) in the first state, and the signal, derived from at least one sensor (18), in the second state, and for supplying a square-wave signal as a measure of the distance travelled by the vehicle.

2. Position-sensing device (17) according to Claim 1, **characterized in that** a changeover switch (24) is provided for receiving at least one signal, derived from a sensor (18), at its input (27) and for connecting its input (27) to its first output (28) which is connected to the input (30) of the amplifier circuit (25), during the first state, and for connecting its input (27) to its second output (29), which is connected to the input (32) of the comparator circuit (26), during the second state.

3. Position-sensing device (17) according to Claim 1, **characterized in that** the detector (22) contains an operational amplifier (46) which operates as a comparator and whose non-inverting input is connected to a voltage divider (47, 48) for setting the threshold value, and whose inverting input is connected to a low-pass filter (44, 45) via which signals are fed from at least one sensor (18).

4. Position-sensing device (17) according to Claim 1, **characterized in that** the sample-and-hold memory (23) contains a JK bistable element (49) whose clock input is provided for receiving the output signal of the detector (22).

5. Position-sensing device (17) according to Claim 1, **characterized in that** the comparator circuit (26) contains an operational amplifier which operates as a comparator and whose non-inverting input is connected to a resistor network for setting a first switching hysteresis during the first state, and a second switching hysteresis during the second state.

6. Navigation system having a position-sensing device (17) according to one of Claims 1 to 5.

## Revendications

1. Dispositif de détection d'un déplacement (17) comprenant
- au moins un capteur destiné à fournir un signal sinusoïdal ou rectangulaire en fonction du chemin parcouru,
- un détecteur (22) destiné à constater, au moins jusqu'à une vitesse moyenne, quel e st le g enre du signal délivré par le a u moins u n capteur (18),
- une mémoire de maintien (23) permettant de stocker un premier état lors de la détection d'un signal sinusoïdal et un deuxième état lors de la détection d'un signal rectangulaire,
- un circuit amplificateur (25) destiné à recevoir, dans le premier état, le signal déduit du au moins un capteur (18) et
- un circuit de comparaison (26) destiné à recevoir, dans le premier état, le signal de sortie du circuit amplificateur (25) et, dans le deuxième état, le signal déduit du au moins un capteur (18) et à délivrer un signal rectangulaire en tant que dimension pour le chemin parcouru par le véhicule.

2. Dispositif de détection d'un déplacement (17) selon la revendication 1 **caractérisé par le fait qu'**il est prévu un inverseur (24) permettant, pendant le premier état, de recevoir à son entrée (27) au moins un signal déduit d'un capteur (18) et de coupler son entrée (27) à sa première sortie (28), qui est couplée à l'entrée (30) du circuit amplificateur (25), et, pendant le deuxième état, de coupler son entrée (27) à sa deuxième sortie (29), qui est couplée avec l'entrée (32) du circuit de comparaison (26).

3. Dispositif de détection d'un déplacement (17) selon la revendication 1 **caractérisé par le fait que** le détecteur (22) renferme un amplificateur opérationnel (46) fonctionnant comme comparateur, dont l'entrée non inversante est couplée à un diviseur de tension (47, 48) permettant de régler la valeur seuil et dont l'entrée inversante est couplée à un passe-bas (44, 45), et à travers lequel sont conduits des signaux venant d'au moins un capteur (18).

4. Dispositif de détection d'un déplacement (17) selon la revendication 1 **caractérisé par le fait que** la mémoire de maintien (23) renferme une bascule JK (49), dont l'entrée de cadence d'horloge est prévue pour recevoir le signal de sortie du détecteur (22).

5. Dispositif de détection d'un déplacement (17) selon la revendication 1 **caractérisé par le fait que** le circuit de comparaison (26) renferme un amplificateur opérationnel fonctionnant comme comparateur, dont l'entrée non inversante est reliée à un réseau de résistances destiné à régler, pendant le premier état, une première hystérésis de commutation et, pendant le deuxième état, une deuxième hystérésis de commutation.

6. Système de navigation comportant un dispositif de détection d'un déplacement (17) selon l'une des revendications 1 à 5.
